# FASCICULE DE BREVET EUROPEEN

(11) **EP 0 538 088 B1**
(45) Date de publication et mention de la délivrance du brevet: **14.06.1995**
(21) Numéro de dépôt: 92402681.8
(22) Date de dépôt: 02.10.1992
(51) Int. Cl.: B64C 27/33, B29D 31/00

(54) **Rotor multipale, notamment pour hélice arrière anticouple d'hélicoptère et procédé pour sa réalisation**
Mehrblätterrotor, insbesondere eines Hubschrauberdrehmomentausgleichsheckrotor, und sein Herstellungsverfahren
Multiblade rotor, in particular for helicopter anti-torque rotor, and its manufacturing process

(30) Priorité: 16.10.1991 FR 9112731
(43) Date de publication de la demande: 21.04.1993
(73) Titulaire: AEROSPATIALE Société Nationale Industrielle, 75781 Paris Cédex 16 (FR)
(72) Inventeur: Guimbal, Bruno, F-13290 Les Milles (FR)
(74) Mandataire: Bonnetat, Christian

(56) Documents cités:
- FR-A- 2 125 150
- US-A- 3 765 267

## Description

La présente invention concerne un rotor multipale à pas variable, notamment approprié à servir de rotor arrière anticouple d'hélicoptère, lorsque ce rotor arrière est du type caréné et comporte habituellement un grand nombre de pales. Elle concerne également le procédé d'obtention d'un tel rotor comportant un corps de moyeu.

Pour fixer les pales à pas variable sur le corps de moyeu d'entraînement en rotation au moyen d'un dispositif offrant une résistance mécanique appropriée, particulièrement à l'encontre des efforts de traction centrifuge qui s'exercent sur les pales du fait de leur rotation à grande vitesse, il est connu d'utiliser des lames torsibles constituées de fibres à haute résistance mécanique, lesdites lames étant disposées radialement entre le corps de moyeu et chaque pale et étant solidarisées à leur extrémité externe, par rapport à l'axe de rotation du rotor, à la structure résistante de la pale et à leur extrémité interne au corps de moyeu.

Ainsi, dans le brevet FR-A-2 430 354, on décrit une méthode pour constituer une hélice multipale comportant au moins une paire de pales opposées. Cette paire de pales opposées est constituée essentiellement, d'une part, par une unique lame allongée, en fibres à haute résistance mécanique agglomérées par une résine synthétique, ladite lame étant assujettie en son milieu à un moyeu d'entraînement et, d'autre part, par deux coquilles à profil aérodynamique fixées respectivement à ladite lame allongée de part et d'autre du moyeu, l'extrémité interne par rapport à l'axe de rotation du rotor de chaque coquille étant solidaire d'un organe de commande du pas de la pale correspondante, aménagé de façon à exercer sur ladite coquille un couple de torsion centré sur l'axe longitudinal de la lame allongée. Cette lame est formée par deux demi-faisceaux plats disposés côte-à-côte selon la petite dimension de leur section et légèrement espacés à leur mi-longueur de façon à laisser passer l'axe coulissant de commande du pas des pales.

Une hélice peut ainsi être constituée d'une pluralité de telles paires de pales opposées, les lames respectives formant les divers tirants torsibles raccordant lesdites coquilles à profil aérodynamique étant superposées selon des plans perpendiculaires à l'axe de rotation dudit rotor, au niveau de leur passage près de l'axe de commande et enrobées par un liant assurant la solidarisation de l'ensemble de ces lames entre elles dans cette zone centrale, où elles constituent ainsi le corps de moyeu, lequel est solidarisé à un arbre d'entraînement.

Par ailleurs, on connaît, par le brevet FR-A-2 041 747, un élément de liaison, et son procédé de fabrication, entre deux corps rigides, qui comporte un faisceau de fibres de forte résistance mécanique disposé longitudinalement dans cet élément. Un tel élément de liaison, de forme aplatie, peut constituer l'attache de retenue d'une pale de rotor sur le corps de moyeu dudit rotor, ledit faisceau étant torsible de façon à permettre les variations de pas commandées de ladite pale. L'armature résistante d'une telle pale peut alors être constituée par les prolongements de tels faisceaux dans sa partie empennée.

De telles réalisations comportent cependant des limitations. Dans le brevet FR-A-2 430 354, les pales doivent être opposées, imposant donc un nombre pair de pales, ce qui peut être gênant si, pour des raisons d'acoustique par exemple, il convient d'en installer un nombre impair. De plus, les lames sont empilées dans le corps de moyeu et il n'y a ainsi pas de symétrie de révolution, chaque lame tournant dans un plan qui lui est propre, ce qui contraint à assurer une torsion différente de chaque lame de façon que les points homologues de chaque pale puissent tourner dans un plan commun. De plus, le fait que chaque demi-faisceau contourne l'alésage central du corps de moyeu sur la moitié de son pourtour, entraîne que ces lames occupent un volume relativement important dans la zone centrale du corps de moyeu. Les demi-faisceaux sont alors emprisonnés dans cette zone par le liant sur une longueur relativement élevée et ne peuvent donc assurer aucune élasticité de torsion dans cette zone, en particulier pour suivre les variations de pas commandées des pales. Il faut alors allonger la partie torsible des lames pour obtenir l'élasticité de torsion nécessaire au bon fonctionnement du rotor jusqu'à ses limites de pas.

Dans la réalisation décrite par le brevet FR-A-2 041 747, il est possible d'avoir un nombre pair ou impair de pales, mais le nombre total de faisceaux constitutifs desdites pales est limité du fait que ces faisceaux de fibres sont fléchis à plat dans le corps de moyeu, donc selon la direction où ils présentent la plus forte inertie, d'un angle égal à celui existant entre deux pales voisines, ce qui entraîne l'existence de longueurs nettement différentes entre les fibres d'un même faisceau et, de ce fait, une mauvaise répartition des contraintes mécaniques entre les fibres de ce faisceau.

La présente invention vise à éviter ces inconvénients et permet d'obtenir un rotor multipale dont le nombre de pales peut être pair ou impair, dont la partie centrale formant moyeu a un encombrement réduit et dont les éléments résistants et torsibles de retenue des pales sont disposés dans le moyeu de façon à répartir au mieux les contraintes entre les fibres travaillantes de cesdits éléments résistants.

A cet effet, le rotor multipale selon l'invention, notamment pour hélice arrière anticouple d'hélicoptère, comportant un corps de moyeu auquel sont raccordés radialement des lames torsibles de retenue des pales, en nombre égal au nombre de pales, formées chacune de deux faisceaux de fibres à haute résistance mécanique agglomérées par une résine synthétique durcie, chacun desdits faisceaux ayant une section aplatie et formant au moins deux moitiés de lames différentes, est remarquable en ce que chacun des faisceaux est vrillé et cintré au niveau de son passage à proximité de la zone centrale circulaire du corps de moyeu de façon qu'il tangente la circonférence de ladite zone centrale du moyeu selon la plus grande dimension de sa section.

Ainsi, on peut constituer un rotor en étoile à nombre de pales pair ou impair, tout en n'imposant pas aux faisceaux de retenue des pales de contraintes de torsion importante pour leur fixation sur le moyeu lorsqu'il y a un nombre important de pales.

De plus, chaque faisceau d'une lame peut passer, au niveau du moyeu, au-dessus d'un premier autre faisceau et au-dessous d'un second autre faisceau.

Les diverses lames du rotor sont ainsi tressées et leurs points homologues sont disposés dans un même plan de rotation autour de l'arbre du rotor, ce qui évite d'avoir à donner une torsion différente de chacune de ces lames pour ramener leurs points homologues dans un même plan de rotation.

En particulier, lesdits premier et second autres faisceaux au-dessus et au-dessous desquels passe un faisceau peuvent appartenir à une même lame.

On peut, de ce fait, effectuer un croisement au niveau de la base d'une lame et ainsi réaliser un tressage entre faisceaux de lames voisines.

Un avantage présenté par un tel rotor est que les sections des divers faisceaux peuvent être orientées selon un même angle par rapport au plan de rotation des lames autour de l'arbre du rotor.

On peut ainsi préformer les lames pour leur donner le précalage angulaire de pas le mieux adapté au rotor, en particulier pour réduire la torsion imposée aux lames pour appliquer le pas maximal prévu pour les pales. Le calage angulaire des lames peut être donné par des gorges ménagées dans la partie périphérique du corps de moyeu.

De plus, les deux faisceaux de fibres constituant chaque lame peuvent être accolés selon la plus faible dimension de leur section de façon à opposer le plus faible couple résistant à leur torsion.

Au moins une lame du rotor peut avantageusement constituer un longeron pour la partie empennée de la pale associée.

On dispose ainsi d'une lame et d'une pale d'un seul tenant, et l'on peut réaliser, par application à toutes les lames, un rotor constitué d'une pièce d'un seul tenant, ce qui en simplifie l'assemblage et en diminue le coût.

Il est aussi possible qu'au moins une desdites lames du rotor comporte, en extrémité, une boucle permettant d'y raccorder une pale.

Cela permet de changer aisément une pale détériorée en utilisation, sans avoir à changer la totalité du rotor.

Pour réaliser ledit rotor, selon l'invention, un procédé de fabrication d'un rotor multipale, notamment pour hélice arrière anticouple d'hélicoptère, au moyen d'un moule formé de deux demi-moules, ledit rotor comportant un bloc cylindrique central formant moyeu auquel sont raccordées des lames torsibles formées chacune de deux faisceaux de fibres à section aplatie, chacun desdits faisceaux formant deux moitiés de lames différentes, est remarquable en ce qu'il comporte les étapes suivantes :
- on place, au centre du premier demi-moule, ledit bloc cylindrique comportant une collerette axiale cylindrique centrale et des passages radiaux pour les différents faisceaux, on fait tangenter la paroi extérieure cylindrique de ladite collerette par le milieu d'un premier faisceau de fibres imprégnées de résine polymérisable, vrillé et cintré dans la zone où se produit la tangence, et on dispose respectivement, selon la longueur du volume réservé dans ce premier demi-moule à une première paire de lames, chaque moitié dudit premier faisceau, en donnant, par vrillage et cintrage au voisinage du bloc cylindrique, l'orientation voulue pour la section de chacune desdites lames de ladite première paire de lames dont ce premier faisceau constitue la moitié ;
- on répète l'étape précédente, en utilisant un deuxième faisceau de fibres imprégnées de résine polymérisable, relativement à une deuxième paire de lames, ce deuxième faisceau passant au-dessus du premier faisceau placé lors de l'étape précédente ;
- dans une série d'étapes successives, on répète l'étape précédente avec, respectivement, des troisième faisceaux et suivants de fibres imprégnées de résine polymérisable, respectivement relatifs à des troisième et suivantes paires de lames, jusqu'à former la seconde moitié de la dernière lame restant à compléter, par la moitié du dernier faisceau passant, au niveau du bloc cylindrique, sous un autre faisceau ;
- on remplit de résine polymérisable les volumes libres et on met en place le second demi-moule ; et
- on procède à la polymérisation de ladite résine.

On peut ainsi obtenir un rotor à nombre pair ou impair de lames, chacune d'elles ne subissant qu'une contrainte mécanique limitée de vrillage et de cintrage pour son raccordement au moyeu central, tout en ayant une bonne élasticité de torsion du fait qu'elle est encastrée sur une faible longueur près du centre du rotor.

Ces faisceaux peuvent ainsi être mieux solidarisés avec ce bloc cylindrique.

Dans ce procédé de fabrication d'un rotor multipale, on peut de plus, avant polymérisation de la résine, placer, sur l'ensemble des constituants précédemment installés dans ledit premier moule, un couvercle ayant sensiblement le même diamètre que ledit bloc cylindrique.

Ce couvercle enferme ainsi les parties vrillées et cintrées des faisceaux et les maintient en place.

Ledit bloc cylindrique peut être constitué par un matériau rigide constitué de fibres mécaniquement résistantes enrobées d'un produit polymérisable.

Ce bloc n'a ainsi pas à être usiné dans un matériau dur, et peut simplement être moulé. De plus, il est ainsi de faible poids.

Les figures du dessin annexé feront bien comprendre comment l'invention peut être réalisée. Sur ces figures, des références identiques désignent des éléments semblables.

La figure 1 représente en détail l'agencement des lames du rotor de l'invention, selon un exemple de réalisation d'un rotor à sept lames.

La figure 2 est une vue en coupe, selon la ligne II-II de la figure 1, montrant l'orientation de la section des lames de l'étoile ainsi constituée.

La figure 3 est une vue latérale du rotor de la figure 1, suivant la flèche III.

La figure 4 est une vue en coupe selon l'axe du rotor.

La figure 5 représente la configuration d'une lame du rotor selon l'invention, se prolongeant dans la pale pour servir de longeron.

La figure 6 représente une configuration semblable à celle de la figure 5, la lame étant adaptée à son extrémité libre pour recevoir une liaison démontable avec une pale.

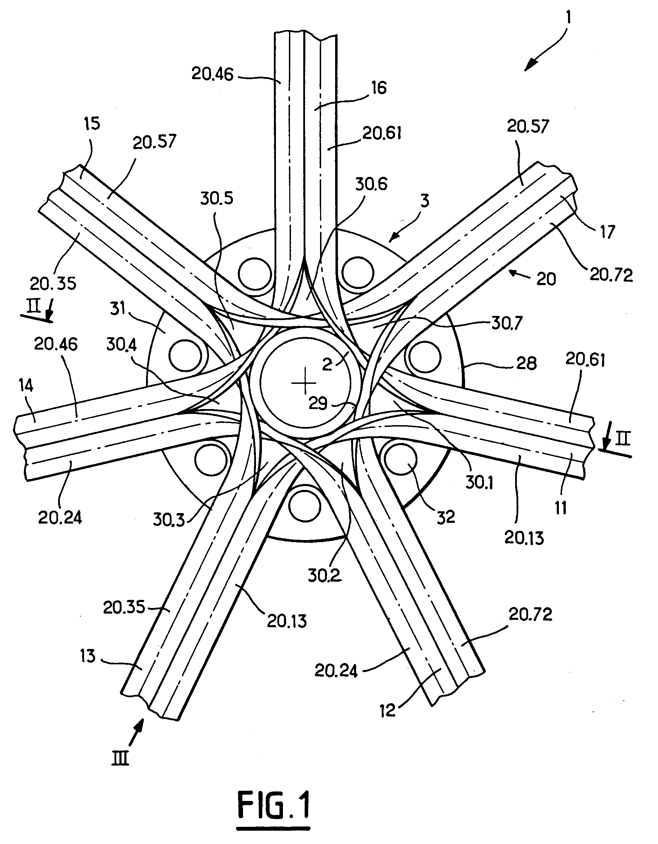

Le rotor 1 en étoile, représenté sur la figure 1, comporte une collerette centrale 2 centrée sur l'axe de rotation du rotor (supposé perpendiculaire au plan de ladite figure) et solidaire d'un moyeu 3 auquel est raccordé un ensemble de sept lames 11 à 17, dont les points homologues sont situés dans un même plan dans lequel ils sont destinés à tourner, plan perpendiculaire à l'axe dudit rotor 1. Chaque lame 11 à 17 est formée d'une première moitié de lame et d'une seconde moitié de lame, juxtaposées selon leur longueur, sous forme d'une paire de faisceaux appartenant à un ensemble de sept faisceaux 20 identiques de fibres à haute résistance mécanique, disposés longitudinalement à la lame 11 à 17 considérée, ce qui assure à celle-ci une grande rigidité en traction, ainsi qu'une bonne élasticité de torsion. Chaque faisceau 20 sert à former deux moitiés de lame appartenant à des lames 11 à 17 différentes ; il a une section de forme aplatie, sensiblement rectangulaire, et les deux faisceaux 20 formant une même lame telle que 11 sont, dans cet exemple, accolés selon la plus petite dimension de leur section, ce qui donne une forme aplatie à la section de chaque branche 11 à 17.

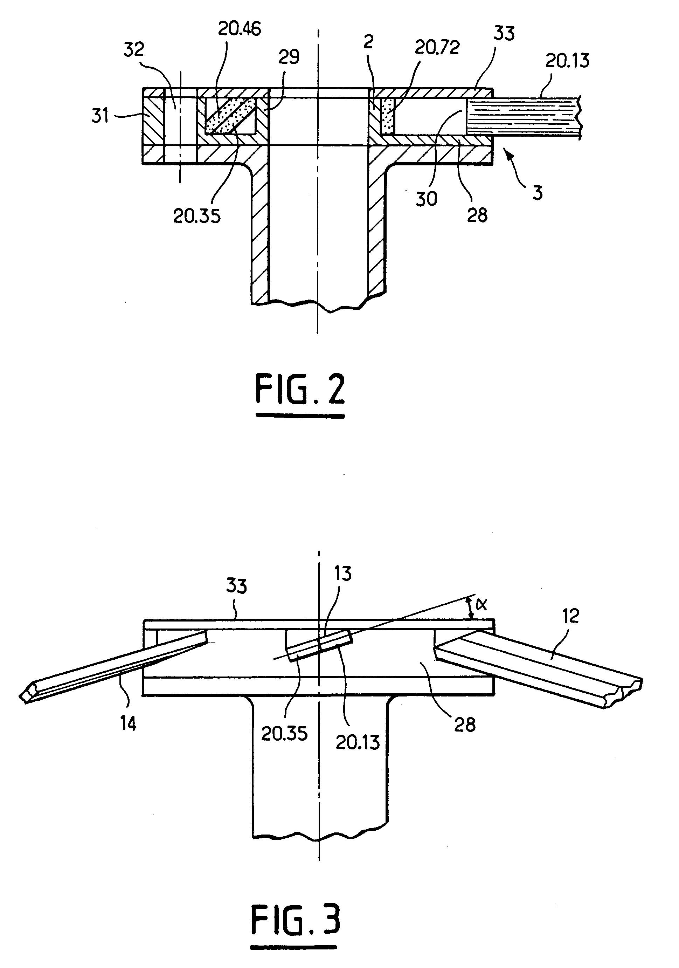

La façon selon laquelle les divers faisceaux 20 sont agencés entre eux est montrée sur les figures 1 et 2. Le corps de moyeu 3 est constitué par un bloc cylindrique 28, d'épaisseur limitée, comportant un trou central bordé par la collerette annulaire 2, ainsi qu'un ensemble de sept gorges radiales 30 usinées et débouchant dans un dégagement ménagé autour de la collerette 2. Ces gorges sont régulièrement espacées angulairement et sont composées d'une première 30.1 à une septième gorge 30.7 respectivement alignées avec la première lame 11 à la septième lame 17, destinées chacune à assurer le passage des deux faisceaux 20 formant la lame 11 à 17 considérée. La section de ces gorges 30 correspond aux formes vrillées et cintrées des faisceaux 20 telles que définies ci-dessous. La présence de ces gorges 30 et du dégagement central fait que le bloc cylindrique 28 se trouve réduit, sur une partie de son épaisseur, d'une part à la collerette annulaire centrale 2 et, d'autre part, par la matière 31 subsistant dans la partie périphérique du bloc cylindrique 28. Il est ainsi créé un volume annulaire creux autour de la paroi extérieure cylindrique 29 de la collerette annulaire 2 où les faisceaux 20 peuvent passer et y changer de direction, l'accès à ce volume annulaire se faisant au niveau des gorges 30.

Un premier faisceau 20.13 est disposé, à mi-longueur, tangentiellement à la paroi 29 de la collerette 2, comme détaillé ci-dessous, et il forme, par l'une de ses moitiés, la première moitié de la lame 11, tandis que sa seconde moitié forme la seconde moitié de la lame 13. La plus grande dimension de la section de ce premier faisceau 20.13 constitutif des lames 11 et 13 est disposée sensiblement dans un plan parallèle à l'axe du rotor et ce premier faisceau 20.13 est vrillé, sensiblement d'un quart de tour, et légèrement cintré au niveau de son passage dans la première gorge 30.1 située en face de la première lame 11, ce qui permet audit premier faisceau 20.13 d'avoir une surface de contact qui est sensiblement parallèle à la périphérie 29 de ladite collerette annulaire 2. Le vrillage du premier faisceau 20.13 se poursuit dans le même sens, encore d'environ un quart de tour, ainsi que le cintrage, pour former ladite seconde moitié de la troisième lame 13, en passant par le dégagement annulaire central. La forme de la section des gorges 30 et du dégagement annulaire est adaptée pour permettre le passage de faisceaux tels que le premier faisceau 20.13 vrillé et cintré, ce qui permet ainsi à celui-ci de tangenter la paroi extérieure cylindrique 29 selon la plus grande dimension de sa section. Ce cheminement des faisceaux permet aussi d'obtenir une grande résistance à l'arrachement par force centrifuge, puisque chaque faisceau 20 ne cisaille pas la matière synthétique d'enrobage qui est mise ultérieurement pour assurer la cohésion du tout.

Le premier faisceau 20.13 passe de la première lame 11 à la troisième lame 13 sans subir de flexion notable qui induirait des allongements différents des diverses fibres de ce premier faisceau 20.13, puisque le vrillage et le cintrage d'une section aplatie s'effectue pratiquement sans déplacements rotatifs des fibres qui la constituent. De plus, ce premier faisceau 20.13 ne tangentant la collerette annulaire 2 que sur une partie limitée de sa périphérie, inférieure à la moitié du pourtour, le volume occupé par ce premier faisceau 20.13 dans le volume annulaire central est limité, ce qui implique que l'on peut faire transiter un nombre de faisceaux 20 relativement élevé, à volume annulaire central occupé constant. Les divers faisceaux 20 sont, après mise en place de tous, solidarisés, par exemple, par une matière synthétique assurant le collage des divers éléments.

Un deuxième faisceau 20.24 sert à constituer la première moitié de la deuxième lame 12 et la seconde moitié de la quatrième lame 14. On comprendra que la disposition relative de ce deuxième faisceau 20.24 est la même que celle du premier faisceau, à une rotation de 1/7 tour près autour de l'axe du rotor. Ce deuxième faisceau 20.24 passe au-dessus du premier faisceau 20.13 à proximité de sa zone de tangence avec la paroi cylindrique externe 29 de la collerette annulaire 2.

Il est successivement mis en place, de la même façon, un troisième 20.35, un quatrième 20.46, un cinquième 20.57 et un sixième 20.61 faisceau. Un septième faisceau 20.72 est, de même, mis en place, à la différence près qu'il passe sous le premier faisceau 20.13, et non dessus. On constitue ainsi un tressage régulier, chaque faisceau 20 occupant une même position axiale et les points homologues des divers faisceaux 20 se trouvant ainsi dans le même plan de rotation que les autres.

Des trous 32, disposés en périphérie du bloc cylindrique 28, dans les zones 31 entre les gorges 30, servent au passage de vis servant au couplage de ce bloc cylindrique 28 en vue de son entraînement par un arbre d'axe confondu avec celui du rotor.

Comme exposé dans l'exemple ci-dessus, tous les faisceaux 20 ont la même forme, et sont imbriqués de la même façon, ce qui assure une symétrie de révolution à l'ensemble. Toutes les lames 11 à 17 ont, de ce fait, une position relative semblable, ce qui assure que leurs points homologues sont dans le même plan de rotation et, en particulier, que les pales qui leur sont liées tournent dans le même plan de rotation.

Cet exemple n'est qu'une parmi plusieurs configurations possibles.

En particulier, il est possible d'avoir un pas de tressage différent de deux, comme dans l'exemple précédent, c'est-à-dire qu'un faisceau 20 partant d'une lame 11 de rang "i" peut aboutir à une lame 11 à 17 de rang différent de "i+2", et éventuellement traverser ainsi plusieurs ouvertures limitées par le diamètre extérieur de la collerette cylindrique centrale 2 et d'autres faisceaux 20. De même, le pas de tressage peut être de 1, ce qui est un cas particulier pour lequel les faisceaux 20 ne se croisent pas.

Les modalités pratiques de mise en place successive des divers faisceaux 20 peuvent aussi être modifiées ; il n'est, en particulier, pas obligatoire de former successivement la première moitié de lames contiguës.

Le nombre de lames telles que 11 peut aussi être pair.

Par ailleurs, il n'est pas obligatoire que le vrillage se fasse dans le même sens pour tous les faisceaux 20, ou que le cheminement dans le volume annulaire entourant la collerette cylindrique 2 soit strictement le même, puisque le passage des faisceaux par les gorges maintient les faisceaux 20 dans un même plan pour former les lames 11 à 17.

La disposition relative de la section des deux faisceaux 20 formant une lame 11 n'est pas non plus limitée à l'exemple décrit, et, en particulier, pour certaines applications, ces deux faisceaux 20 peuvent être superposés.

Le choix du nombre de faisceaux 20 formant une lame telle 11 du rotor n'est pas non plus restreint au chiffre 2, mais peut être tout nombre entier supérieur ou égal à 1.

Il n'est pas non plus obligatoire que la relation entre le nombre de lames telles que 11 et le pas de tressage fasse qu'il y ait une continuité dans la formation de toutes les lames telles que 11. Il est en effet possible que l'étoile formée des lames 11 à 17 soit constituée de l'imbrication de plusieurs étoiles élémentaires, constituées chacune d'un nombre limité de faisceaux 20, lesdits faisceaux 20 d'une étoile élémentaire étant cependant imbriqués avec la totalité des faisceaux 20.

L'orientation de la section de chaque faisceau 20, du côté excentrique du rotor 1, peut ne pas être selon le plan des lames, mais former un certain angle avec ce plan, comme l'illustre la figure 3. Cette orientation est définie par ledit vrillage au niveau du bloc cylindrique 28, et elle présente surtout une utilité lorsque ledit rotor 1 sert à former une hélice complète dont les plages de pas ne sont pas symétriques autour du pas nul. Ainsi, la figure 3 montre que la section des lames telles que 12 n'est pas orientée selon le plan de rotation du rotor 1, mais forme un angle d'environ 10 à 15 degrés. Un tel angle correspond à un angle moyen de pas pour un rotor 1 arrière d'hélicoptère, et on peut ainsi commander la variation dynamique de cet angle par une commande de vrillage complémentaire, au moyen d'un dispositif mécanique connu. Le vrillage permanent peut être obtenu par un vrillage uniquement au niveau des gorges 30 ; dans ce cas, leur forme est modifiée en conséquence ; cette modification peut aussi aider au passage entrelacé des faisceaux 20.

Les différents faisceaux 20 ayant ainsi été mis à leur place relative, ils sont alors recouverts d'un couvercle 33 cylindrique, sensiblement de même diamètre que le bloc cylindrique 28 et, de préférence, constitué du même matériau. Ce bloc cylindrique 28 et ce couvercle 33 sont constitués, par exemple, d'un empilage de couches circulaires de tissu de verre, de carbone ou, de façon générale, de fibres mécaniquement résistantes enrobées d'un liant, tel qu'une résine synthétique, cet empilage étant polymérisé à chaud et sous pression. De leur côté, les fibres des faisceaux 20 sont enrobées de résine synthétique. Pour solidariser l'ensemble des constituants du rotor 1 et donner la forme définitive, on utilise un moule, formé d'un premier et d'un second demi-moule semblables et ayant chacun la forme correspondant au coeur du moyeu 3 et aux lames 11 à 17, et l'on obtient le rotor 1 à la suite des étapes suivantes :
- de préférence, on usine préalablement le bloc cylindrique 28, de façon telle qu'il subsiste la collerette annulaire 2, ayant le même axe que ledit bloc cylindrique 28 et les zones 31 séparant les gorges 30, réparties angulairement de façon régulière et permettant chacune le passage de deux faisceaux 20 vrillés tangentant la paroi extérieure 29 de la collerette 2 selon la plus grande dimension de la section d'un faisceau 20 ;
- on place ledit bloc cylindrique 28 au centre dudit premier demi-moule, en l'axant sur l'axe de symétrie dudit demi-moule et on le fait tangenter par le milieu du premier faisceau 20.13, vrillé et cintré dans la zone où se produit la tangence, passant dans la première gorge 30.1 et la troisième gorge 30.3, et on dispose respectivement, selon la longueur du volume réservé, dans le premier demi-moule, aux première 11 et troisième 13 lames respectivement associées auxdites première 30.1 et troisième 30.3 gorges, chaque moitié dudit premier faisceau 30.13, en donnant, par vrillage au niveau du bloc cylindrique 28, l'orientation voulue pour la section de chacune des première 11 et troisième 13 lames dont ce premier faisceau 20.13 constitue la moitié ;
- on répète l'étape précédente, en utilisant un deuxième faisceau 20.24 au lieu du premier faisceau 20.13, relativement à la paire des deuxième 12 et quatrième 14 lames de rangs respectifs suivants, ce deuxième faisceau 20.24 passant au-dessus de la troisième gorge 30.3 occupée partiellement par le premier faisceau 20.13 placé lors de l'étape précédente ;
- dans une série d'étapes successives, on répète l'étape précédente avec des troisième 20.35, quatrième 20.46, cinquième 20.57, sixième 20.61 et septième 20.72 faisceaux, respectivement relativement aux paires de lames 13 et 15, 14 et 16, 15 et 17, 16 et 11, et 17 et 12 de rangs respectifs suivants, jusqu'à former la seconde moitié de la deuxième lame 12 par la moitié du septième faisceau 20.72 passant, au niveau du bloc cylindrique 28, sous le premier faisceau 20.13.

Ensuite, on place, sur l'ensemble des constituants précédemment installés dans ce premier demi-moule, le couvercle 33 de diamètre sensiblement égal à celui du bloc cylindrique 28 et, de préférence, formé des mêmes matériaux.

On remplit alors de colle les volumes libres et on met en place le second demi-moule.

Ces divers éléments sont alors solidarisés du fait qu'on place le moule dans un four pour polymériser la résine et durcir la colle.

Après démoulage et refroidissement, on fore les trous 32 pour des boulons 32A servant à solidariser le corps de moyeu 3 sur l'arbre d'entraînement, et le trou central à son diamètre définitif.

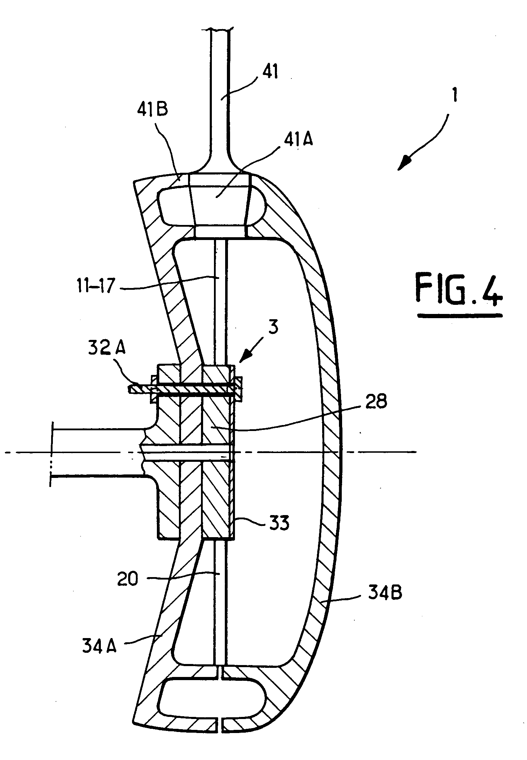

L'ensemble est ensuite monté dans le moyeu 34, représenté sur la figure 4, qui est une coupe selon l'axe du trou central ; ce moyeu 34 est constitué de deux flasques 34A et 34B de même diamètre, venant recouvrir le bloc cylindrique 28 et le départ des lames 11 à 17. Ce moyeu 34 emprisonne les lames 11 à 17 et forme un palier servant d'appui à l'emplanture des pales ; ainsi, lorsque ce rotor 1 est en rotation, ces lames 11 à 17 ne subissent pas de contrainte de flexion.

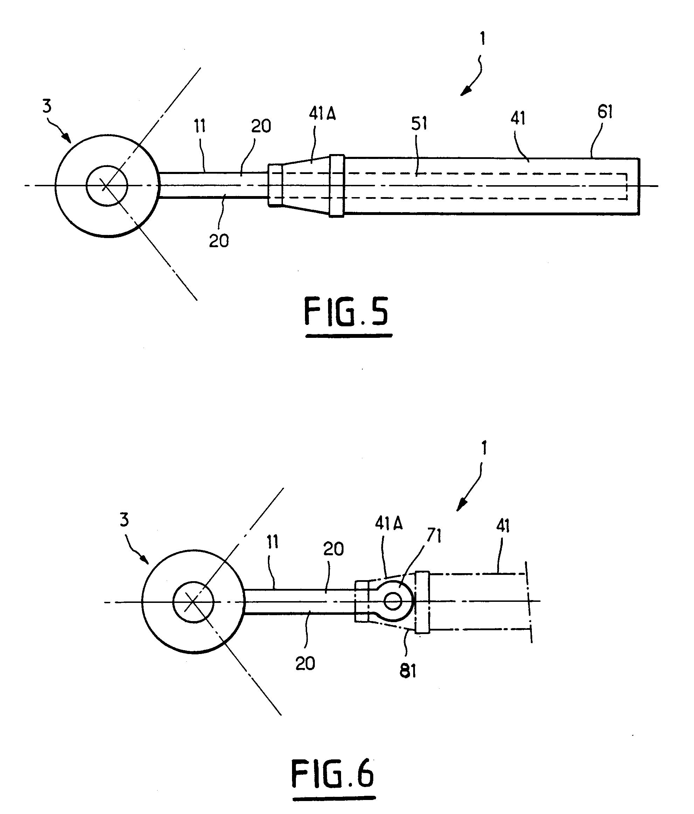

Les lames 11 à 17 d'un tel rotor 1 peuvent se prolonger par des pales 41, dont les pieds de pale 41A sont montés rotatifs dans des paliers 41B du moyeu 34 (voir la figure 4). Ainsi, le pas desdites pales 41 peut être commandé de façon connue par un levier manoeuvré par un dispositif de commande non représenté. Dans le mode de réalisation de la figure 5, les deux faisceaux 20 d'une lame telle que 11 se prolongent, à partir du centre du rotor 1, pour former le longeron 51 de la pale 41, c'est-à-dire qu'ils constituent la partie résistante de cette pale 41, qui est constituée, par ailleurs, d'un produit de remplissage, tel une matière synthétique adhésive, cellulaire ou en mousse, entre ledit faisceau 20 et une coquille 61 ayant la forme aérodynamique voulue pour ladite pale 41.

Une autre forme de réalisation de ce rotor 1 est représentée sur la figure 6. La structure est la même que celle exposée en regard de la figure 4, mais les faisceaux 20 de chaque lame telle que 11 ne sont pas prolongés pour former le longeron 51 de la pale 41 correspondante ; ils sont respectivement terminés par une boucle telle que la boucle 71 sur laquelle peut se raccorder, par mise en place d'un boulon, un pied 81 de la pale 41. Ainsi, chaque lame telle que 11 est constituée d'un même faisceau 20, qui, partant du centre du rotor 1, va jusqu'à l'extrémité de cette lame 11 puis en revient après avoir formé ladite boucle 71. Cette boucle 71 peut être formée par l'extrémité du faisceau 20 sur une douille cylindrique. Une telle boucle 71 offre un mode de raccordement très simple et ayant une grande résistance, puisque les fibres du faisceau 20 ne sont pas interrompues. L'intérêt de cette forme de réalisation est de permettre le démontage de chaque pale individuellement, ce qui peut être avantageux si une pale, endommagée en service par un corps étranger, doit être remplacée rapidement et économiquement.

## Revendications

1. Rotor multipale (1), notamment pour hélice arrière anticouple d'hélicoptère, comportant un corps de moyeu (3) auquel sont raccordées radialement des lames torsibles (11 à 17) de retenue des pales, en nombre égal au nombre de pales, formées chacune de deux faisceaux (20) de fibres à haute résistance mécanique agglomérées par une résine synthétique durcie, chacun desdits faisceaux ayant une section aplatie et formant au moins deux moitiés de lames différentes,
caractérisé en ce que chacun des faisceaux (20) est vrillé et cintré au niveau de son passage à proximité de la zone centrale circulaire du corps de moyeu (3) de façon qu'il tangente la circonférence de ladite zone centrale du moyeu selon la plus grande dimension de sa section.

2. Rotor (1) selon la revendication 1,
caractérisé en ce que chaque faisceau (20) d'une lame (11) passe, au niveau du corps de moyeu (3), au-dessus d'un premier autre faisceau (20) et au-dessous d'un second autre faisceau (20).

3. Rotor (1) selon la revendication 2,
caractérisé en ce que lesdits premier et second autres faisceaux (20) appartiennent à une même lame (11 à 17).

4. Rotor (1) selon l'une quelconque des revendications 1 à 3,
caractérisé en ce que les sections des divers faisceaux (20) sont orientées selon un même angle par rapport au plan de rotation des lames (11 à 17) autour de l'arbre du rotor (1).

5. Rotor selon l'une quelconque des revendications 1 à 4,
caractérisé en ce que le calage angulaire des lames (11 à 17) hors du corps de moyeu (3) leur est donné par des gorges (30) ménagées dans la partie périphérique dudit corps de moyeu (3).

6. Rotor (1) selon l'une quelconque des revendications 1 à 5,
caractérisé en ce que les deux faisceaux (20) de fibres constituant chaque lame (11 à 17) sont accolés à l'extérieur dudit corps de moyeu (3).

7. Rotor (1) selon l'une quelconque des revendications 1 à 6,
caractérisé en ce qu'au moins une desdites lames (11) constitue un longeron pour la partie empennée de la pale (41) correspondante.

8. Rotor (1) selon l'une quelconque des revendications 1 à 6,
caractérisé en ce qu'au moins une desdites lames (11) comporte, en extrémité, une boucle (71) permettant d'y raccorder une pale (41).

9. Procédé de fabrication d'un rotor (1) multipale, notamment pour hélice arrière anticouple d'hélicoptère, au moyen d'un moule formé de deux demi-moules, ledit rotor (1) comportant un bloc cylindrique central (28) formant moyeu auquel sont raccordées des lames (11 à 17) torsibles formées chacune de deux faisceaux (20) de fibres à section aplatie, chacun desdits faisceaux (20) formant deux moitiés de lames (11 à 17) différentes, caractérisé en ce qu'il comporte les étapes suivantes :
- on place, au centre du premier demi-moule, ledit bloc cylindrique (28) comportant une collerette axiale cylindrique centrale (2) et des passages radiaux pour les différents faisceaux, on fait tangenter la paroi extérieure cylindrique (29) de la collerette (2) par le milieu d'un premier faisceau de fibres imprégnées de résine polymérisable (20.13), vrillé et cintré dans la zone où se produit la tangence, et on dispose respectivement, selon la longueur du volume réservé, dans ce premier demi-moule, à une première paire de lames (11,13), chaque moitié dudit premier faisceau (20.13), en donnant, par vrillage et cintrage au voisinage du bloc cylindrique (28), l'orientation voulue pour la section de chacune desdites lames de ladite première paire de lames (11,13) dont ce premier faisceau (20.13) constitue la moitié ;
- on répète l'étape précédente, en utilisant un deuxième faisceau de fibres imprégnées de résine polymérisable (20.24), relativement à une deuxième paire de lames (12,14), ce deuxième faisceau (20.24) passant au-dessus du premier faisceau (20.13) placé lors de l'étape précédente ;
- dans une série d'étapes successives, on répète l'étape précédente avec, respectivement, des troisième faisceaux (20.35) et suivants de fibres imprégnées de résine polymérisable, respectivement relatifs à des troisième et suivantes paires de lames (13,15 ; ... ; 17,12), jusqu'à former la seconde moitié de la dernière lame (12) restant à compléter, par la moitié du dernier faisceau (20.72) passant, au niveau du bloc cylindrique (28), sous un autre faisceau (20.13) ;
- on remplit de résine polymérisable les volumes libres et on met en place le second demi-moule ; et
- on procède à la polymérisation de ladite résine.

10. Procédé de fabrication d'un rotor (1) multipale selon la revendication 9,
caractérisé en ce qu'avant polymérisation de la résine, on place, sur l'ensemble des constituants précédemment installés dans ledit premier demi-moule, un couvercle (33) ayant sensiblement le même diamètre que ledit bloc cylindrique (28).

11. Procédé de fabrication d'un rotor (1) multipale selon la revendication 9,
caractérisé en ce que ledit bloc cylindrique (28) est constitué par un matériau rigide constitué de fibres mécaniquement résistantes enrobées d'un produit polymérisable.

## Claims

1. Multi-blade rotor (1), especially for a helicopter rear anti-couple propeller, comprising a hub body (3) to which are radially connected twistable blade retention straps (11 to 17), equal in number to the number of blades, each formed by two bundles (20) of high-mechanical-strength fibres agglomerated by a hardened synthetic resin, each of the said bundles having a flattened cross-section and forming at least two halves of different straps, characterized in that each of the bundles (20) is twisted and curved in the region of its passage in proximity to the circular central area of the hub body (3) in such a way as to be tangential to the circumference of the said central area of the hub along the greater dimension of its cross-section.

2. Rotor (1) according to Claim 1, characterized in that each bundle (20) of a strap (11) passes, in the region of the hub body (3), above another first bundle (20) and below another second bundle (20).

3. Rotor (1) according to Claim 2, characterized in that said other first and second bundles (20) belong to the same strap (11 to 17).

4. Rotor (1) according to any one of Claims 1 to 3, characterized in that the cross-sections of the various bundles (20) are oriented along the same angle with respect to the plane of rotation of the straps (11 to 17) about the shaft of the rotor (1).

5. Rotor according to any one of Claims 1 to 4, characterized in that the angular setting of the straps (11 to 17) outside the hub body (3) is given to them by grooves (30) produced in the peripheral part of said hub body (3).

6. Rotor (1) according to any one of Claims 1 to 5, characterized in that the two bundles (20) of fibres constituting each strap (11 to 17) are placed side by side outside said hub body (3).

7. Rotor (1) according to any one of Claims 1 to 6, characterized in that at least one of said straps (11) constitutes a spar for the aerodynamically shaped part of the corresponding blade (41).

8. Rotor (1) according to any one of Claims 1 to 6, characterized in that at least one of said straps (11) comprises, at its extremity, a loop (71) making it possible to connect a blade (41) thereto.

9. Method of manufacturing a multi-blade rotor (1), especially for a helicopter rear anti-couple propeller, by means of a mould formed by two half-moulds, said rotor (1) comprising a central cylindrical block (28) forming a hub to which are connected twistable straps (11 to 17) each formed by two bundles (20) of fibres with a flattened cross-section, each of said bundles (20) forming two halves of different straps (11 to 17), characterized in that it comprises the following steps:
- at the centre of the first half-mould is placed said cylindrical block (28) comprising a central cylindrical axial collar (2) and radial passages for the different bundles, the middle of a first bundle of fibres is made to be tangential to the outer cylindrical wall (29) of the collar (2), the fibres being impregnated with polymerizable resin (20.13), twisted and curved in the area where the tangency is produced, and each half of said first bundle (20.13) is arranged respectively, according to the length of the volume reserved, in this first half mould, for a first pair of straps (11, 13), while giving, by twisting and curving in the vicinity of the cylindrical block (28), the required orientation for the cross-section of each of said straps of said first pair of straps (11, 13) of which this first bundle (20.13) constitutes half;
- the preceding step is repeated, by using a second bundle of fibres impregnated with polymerizable resin (20.24), relative to a second pair of straps (12, 14), this second bundle (20.24) passing above the first bundle (20.13) placed during the preceding step;
- in a series of successive steps, the preceding step is repeated with, respectively, third (20.35) and subsequent bundles of fibres impregnated with polymerizable resin, relative respectively to third and subsequent pairs of straps (13, 15; ...; 17, 12), until formation of the second half of the last strap (12) remaining to be completed, by the half of the last bundle (20.72) passing, in the region of the cylindrical block (28), under another bundle (20.13);
- the free volumes are filled with polymerizable resin and the second half-mould is put in place; and
- polymerization of said resin then takes place.

10. Method of manufacturing a multi-blade rotor (1) according to Claim 9, characterized in that before polymerization of the resin, a cover (33) having substantially the same diameter as said cylindrical block (28) is placed on the assembly of the components previously installed in said first half-mould.

11. Method of manufacturing a multi-blade rotor (1) according to Claim 9, characterized in that said cylindrical block (28) is constituted by a rigid material constituted by mechanically-strong fibres coated with a polymerizable product.

## Patentansprüche

1. Mehrblattrotor (1), insbesondere für Gegendrehmoment-Heckrotoren von Hubschraubern, mit einem Nabengehäuse (3), an das radial verwindbare Streifen (11 bis 17) zur Befestigung der Blätter angeschlossen werden, deren Anzahl gleich der Anzahl der Blätter ist, die jeweils aus zwei Bündeln (20) hochfester, durch ein ausgehärtetes Kunstharz verbundener Fasern bestehen, wobei jedes der Bündel einen flachen Querschnitt hat und mindestens zwei Hälften unterschiedlicher Streifen bildet,
dadurch gekennzeichnet, daß jedes der Bündel (20) in dem Bereich, in dem es am zentralen runden Bereich des Nabengehäuses (3) entlanggeführt wird, so verwunden und gebogen ist, daß es den Umfang dieses zentralen Bereichs der Nabe mit der größten Abmessung seines Querschnitts berührt.

2. Rotor (1) nach Anspruch 1,
dadurch gekennzeichnet, daß jedes Bündel (20) eines Streifens (11) im Bereich des Nabengehäuses (3) oberhalb eines weiteren ersten Bündels (20) und unterhalb eines weiteren zweiten Bündels (20) verläuft.

3. Rotor (1) nach Anspruch 2,
dadurch gekennzeichnet, daß das weitere erste und zweite Bündel (20) zum gleichen Streifen (11 bis 17) gehören.

4. Rotor (1) nach einem der Ansprüche 1 bis 3,
dadurch gekennzeichnet, daß die Querschnitte der verschiedenen Bündel (20) nach dem gleichen Winkel gegenüber der Drehebene der Streifen (11 bis 17) um die Welle von Rotor (1) ausgerichtet sind.

5. Rotor nach einem der Ansprüche 1 bis 4,
dadurch gekennzeichnet, daß die Winkeleinstellung der Streifen (11 bis 17) außerhalb des Nabengehäuses (3) durch Nuten (30) im Umfangsteil des Nabengehäuses (3) erfolgt.

6. Rotor (1) nach einem der Ansprüche 1 bis 5,
dadurch gekennzeichnet, daß die beiden Faserbündel (20), aus denen jeder Streifen (11 bis 17) besteht, außerhalb von Nabengehäuse (3) aneinandergefügt werden.

7. Rotor (1) nach einem der Ansprüche 1 bis 6,
dadurch gekennzeichnet, daß mindestens einer der Streifen (11) einen Holm für das Kammstück des entsprechenden Blattes (41) darstellt.

8. Rotor (1) nach einem der Ansprüche 1 bis 6,
dadurch gekennzeichnet, daß mindestens einer der Streifen (11) am Ende eine Schleife (71) hat, die den Anschluß eines Blattes (41) ermöglicht.

9. Verfahren zur Herstellung eines Mehrblattrotors (1), insbesondere eines Gegendrehmoment-Heckrotors von Hubschraubern, durch eine aus zwei Formhälften gebildete Form, wobei der Rotor (1) einen zentralen zylindrischen Block (28) hat, der die Nabe darstellt, an die verwindbare Streifen (11 bis 17) angeschlossen werden, die jeweils aus zwei Faserbündeln (20) mit flachem Querschnitt bestehen, wobei jedes Bündel (20) zwei Hälften unterschiedlicher Streifen (11 bis 17) bildet,
dadurch gekennzeichnet, daß es folgende Stufen umfaßt:
- In die Mitte der ersten Formhälfte wird der zylindrische Block (28) mit einem zentralen zylindrischen axialen Flansch (2) und radialen Durchführungen für die verschiedenen Bündel gebracht, an der zylindrischen Außenwand (29) von Flansch (2) wird die Mitte eines ersten mit einem polymerisierbaren Harz imprägnierten Faserbündels (20.13), das im Kontaktbereich verwunden und gebogen wurde, entlanggeführt, und dann wird entsprechend der Länge des in dieser ersten Formhälfte für ein erstes Streifenpaar (11,13) reservierten Raums jeweils jede Hälfte des ersten Bündels (20.13) angeordnet, wobei durch Verwinden und Biegen in der Nähe des zylindrischen Blocks (28) die Ausrichtung vorgenommen wird, die für den Querschnit jedes der Streifen des ersten Streifenpaares (11,13), von dem dieses erste Bündel (20.13) die Hälfte darstellt, gewünscht wird;
- Die obige Stufe wird mit einem zweiten mit polymerisierbarem Harz imprägnierten Faserbündel (20.24) für ein zweites Streifenpaar (12,14) wiederholt, wobei dieses zweite Bündel (20.24) oberhalb des ersten Bündels (20.13), das in der vorangegangenen Stufe angebracht wurde, verläuft;
- In einer Reihe aufeinanderfolgender Stufen wird die vorangegangene Stufe mit dem dritten (20.35) und den weiteren mit polymerisierbarem Harz imprägnierten Faserbündeln jeweils für das dritte und die folgenden Streifenpaare (13,15; ...; 17,12) wiederholt, bis die zweite Hälfte des letzten Streifens (12) gebildet ist, der noch durch die Hälfte des letzten Bündels (20.72) zu vervollständigen ist, das im Bereich des zylindrischen Blocks (28) unter einem weiteren Bündel (20.13) verläuft.
- Die freien Räume werden mit einem polymerisierbaren Harz ausgefüllt, danach wird die zweite Formhälfte angebracht.
- Dann wird das Harz polymerisiert.

10. Verfahren zur Herstellung eines Mehrblattrotors (1) nach Anspruch 9,
dadurch gekennzeichnet, daß vor der Polymerisation des Harzes auf der Gesamtheit der zuvor in der ersten Formhälfte angebrachten Bestandteile ein Deckel (33) angebracht wird, der etwa den gleichen Durchmesser wie der zylindrische Block (28) hat.

11. Verfahren zur Herstellung eines Mehrblattrotors (1) nach Anspruch 9,
dadurch gekennzeichnet, daß der zylindrische Block (28) aus einem starren Material fester Fasern besteht, die in eine Polymerisationsmasse eingebettet sind.
